# EUROPÄISCHE PATENTSCHRIFT

(11) **EP 2 700 512 B1**
(45) Veröffentlichungstag und Bekanntmachung des Hinweises auf die Patenterteilung: **10.06.2015**
(21) Anmeldenummer: 13174452.6
(22) Anmeldetag: 01.07.2013
(51) Int. Cl.: B60C 1/00, C08K 5/01, C08L 7/00, C08L 9/00, C08L 9/06

(54) **Kautschukmischung**
Rubber compound
Mélange de caoutchouc

(30) Priorität: 20.08.2012 DE 102012107608
(43) Veröffentlichungstag der Anmeldung: 26.02.2014
(73) Patentinhaber: Continental Reifen Deutschland GmbH, 30165 Hannover (DE)
(72) Erfinder: Jungk, Juliane, 30163 Hannover (DE); Große, Julia, 30926 Seelze (DE); Jagst, Eda, 30657 Hannover (DE)
(74) Vertreter: Preusser, Andrea

(56) Entgegenhaltungen:
- EP-A1- 1 077 229
- EP-A1- 1 514 901
- EP-A1- 1 834 811
- DE-A1-102008 055 472
- DATABASE WPI Week 200426 Thomson Scientific, London, GB; AN 2004-272741 XP002715200, & JP 2003 292674 A (TOYO RUBBER IND CO LTD) 15. Oktober 2003 (2003-10-15)

## Beschreibung

Die Erfindung betrifft eine Kautschukmischung, insbesondere für Laufstreifen von Fahrzeugluftreifen.

Fahrzeugluftreifen müssen verschiedenen Anforderungen im Straßenverkehr gerecht werden. So spielt der Abrieb, insbesondere des Laufstreifens, für die Haltbarkeit des Reifens, aber auch für die Umweltbelastung eine wichtige Rolle. Scharfe Straßenbeläge, Schlaglöcher, Geröll und spitze Steine besonders bei LKW-Reifen mit viel oder zeitweisem Geländeeinsatz können zu teilweise schlagartigen Abbröckelungen und damit zu größerem Materialverlust, dem sogenannten "Chip & Chunk", führen. Zudem spielen die Nassgriffeigenschaften des Reifens für die Sicherheit und das Rollwiderstandsverhalten für den Energieverbrauch eine bedeutende Rolle. Üblicherweise optimiert man die Mischungsrezeptur der Laufstreifen für die spezifischen Anforderungen an einen Reifen in seinem jeweiligen Einsatzgebiet.

Es ist in der Fachwelt bekannt, dass eine Verbesserung einer physikalischen Eigenschaft einer Kautschukmischung mit der Verschlechterung einer anderen einhergeht. Ein sogenannter Zielkonflikt besteht z.B. zwischen dem Nassbremsen und dem Rollwiderstand. Ein weiterer Zielkonflikt einer Laufstreifenmischung kann zwischen der Abriebresistenz und dem Rollwiderstand oder dem Widerstand gegenüber Chip & Chunk liegen.

Neben den Anforderungen an diese physikalischen Eigenschaften muss eine Kautschukmischung zudem so beschaffen sein, dass daraus produzierte Produkte, wie ein Fahrzeugreifen, möglichst einfach hergestellt werden können. Dabei spielt die Heizkinetik der Kautschukmischung für die Industrialisierbarkeit eine wichtige Rolle. Ein entscheidender Aspekt ist die Dauer der nötigen Beheizung der Kautschukmischung und damit des Reifens zur Vulkanisation während des Herstellungsprozesses. Längeres Heizen des Reifens verursacht einen höheren Energieverbrauch, während ein zu kurzes Heizen zu einer nicht ausreichenden Vernetzung der Polymerketten führt, womit die strukturelle Haltbarkeit im Fahrbetrieb nicht gegeben ist. Ungünstig ist es auch, wenn nur ein Bauteil ein längeres Beheizen erfordert, da somit andere Bauteile überheizt werden und es zu einer sogenannten Reversion kommen kann. Hierbei werden die entstandenen Schwefelbrücken zwischen den Polymeren teilweise wieder abgebaut, was wiederum eine schlechtere Haltbarkeit hervorruft.

Das Ziel liegt daher darin, den Reifen mit seinen verschiedenen Komponenten derart auszulegen, dass bei einem möglichst geringen Energieverbrauch alle Bauteile möglichst optimal beheizt werden.

Der schnellen Vernetzbarkeit für einen niedrigen Energieverbrauch sind allerdings durch den Produktionsprozess der einzelnen Kautschukmischungen Grenzen gesetzt, da es bei der Extrusion durch Schablonen zur Ausformung einzelner Bauteile zu einer Temperaturerhöhung kommt. Diese kann zu dem sogenannten "Anscorchen" einer Mischung, also einer frühzeitigen unerwünschten Vorvernetzung, führen.

Man ist daher bestrebt in Laufstreifen von Fahrzeugluftreifen Kautschukmischungen einzusetzen, die sich sowohl gut prozessieren lassen als auch gute Reifeneigenschaften erzielen ohne Einbußen in der Heizkinetik hinnehmen zu müssen.

Harze, insbesondere Kohlenwasserstoffharze, sind seit langem bekannte Zuschlagstoffe für Kautschukmischungen für Laufstreifen von Fahrzeugluftreifen. Sie dienen vor allem als Verarbeitungshilfsmittel und bewirken die nötige Grünklebrigkeit der Kautschukmischungen. Ferner lassen sich durch Harze bestimmte Vulkanisateigenschaften wie Härte, Modul und Quellverhalten beeinflussen. Sie können auch als Vulkanisationsharze oder Haftvermittler eingesetzt werden. Typische in der Kautschukindustrie eingesetzte Klebharze sind z.B. Petroleumharze, Terpenharze, Kolophoniumharze, Phenol-Formaldehydharze und Cumaron-Inden-Harze.

Aus der EP 1808456 A1 ist beispielsweise eine Kautschukmischung bekannt, die ein Harz mit einem mittleren Molekulargewicht von weniger als 400 g/mol und einen Erweichungspunkt von weniger als 40 °C sowie Styrol-Butadien-Kautschuk (SBR) als Hauptpolymerkomponente enthält. Die Kautschukmischung weist mit einem Cumaron-Inden-Harz und einer verringerten Menge an Prozessöl ein verbessertes Performance-Niveau hinsichtlich der Eigenschaften Chip&Chunk, Trocken- und Nassbremsen sowie Abrieb auf.

Die DE 102009044471 A1 offenbart eine Kautschukmischung, die 10 phr eines Kolophoniumharzes sowie E-SBR (Emulsionspolymerisierter Styrol-Butadien-Kautschuk) als Hauptpolymerkomponente enthält. Diese Mischung zeigt ein vorteilhaftes Rollwiderstandsverhalten.

Die DE 69837498 T2 offenbart eine Kautschukmischung für Laufstreifen, die ein Harz als Weichmacher mit einem Erweichungspunkt von 35 bis 150 °C, einen Vulkanisationsbeschleuniger vom Typ einer Dithiophosphorverbindung sowie SBR als Hauptpolymerkomponente enthält. Mit einem Luftreifen, der diese Laufstreifenmischung umfasst, werden eine bessere Steuerbarkeit und ein verbesserter Fahrkomfort erzielt.

Aus der EP 2236316 B1 ist eine Kautschukmischung bekannt, die 0,5 bis 10 phr eines Klebharzes (Phenol-Formaldehydharz) in Kombination mit 0,05 bis 2 phr eines nanoskaligen Eisensalzes (Eisenoxid) enthält. Hierdurch werden eine hohe Konfektionsklebrigkeit bei akzeptabler Walzenklebrigkeit sowie hohe Reißdehnungen und Zugfestigkeiten der Kautschukmischung erzielt.

Auch die EP 2236315 B1 offenbart eine Kautschukmischung, die eine hohe Konfektionsklebrigkeit bei akzeptabler Walzenklebrigkeit aufweist. Diese Kautschukmischung enthält 0,5 bis 10 phr eines Klebharzes (Phenol-Formaldehydharz) in Kombination mit 0,05 bis 2 phr eines Aryl- und/oder Phenyldisulfids (Diphenyldisulfid).

Ausführungen bezüglich der Industrialisierbarkeit, wie der Heizkinetik, sind in den genannten Schriften nicht zu finden.

Der Erfindung liegt nun die Aufgabe zugrunde, eine Kautschukmischung bereitzustellen, die eine Verbesserung des Rollwiderstandes bei gleichbleibenden sonstigen Reifeneigenschaften ermöglicht, ohne dass Nachteile bei der Prozessierbarkeit hingenommen werden müssen. Dabei sollen die Heizzeiten eine moderate Zeit zum Ausheizen des Reifens ohne eine gleichzeitige Scorch-Anfälligkeit ermöglichen.

Gelöst wird die Aufgabe erfindungsgemäß dadurch, dass die Kautschukmischung folgende Bestandteile enthält:
- wenigstens einen Dienkautschuk und
- 0,1 bis 20 phr wenigstens eines Cumaron-Inden-Harzes und
- ein Vulkanisationssystem, das wenigstens einen Beschleuniger und elementaren Schwefel und/oder wenigstens eine schwefelspendende Substanz enthält, wobei das Molverhältnis von Beschleuniger zu Schwefel 0,9 bis 5 beträgt, wobei die Gesamtmolmenge Schwefel aus elementarem Schwefel und dem von der schwefelspendenden Substanzen abgegebenem Schwefel besteht.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise weist die erfindungsgemäße Kautschukmischung ein verbessertes Rollwiderstandsverhalten bei gleichbleibenden sonstigen Reifeneigenschaften und eine gleiche oder erhöhte Anvulkanisationszeit t₁₀ sowie keine signifikante Erhöhung hinsichtlich der Ausvulkanisationszeit t₉₀ auf. Somit ist es möglich, mit der Kautschukmischung Erzeugnisse wie z.B. Fahrzeugluftreifen herzustellen, die kostengünstig ausgeheizt werden können ohne die Gefahr des Überheizens anderer Bauteile in Kauf nehmen zu müssen. Dies ermöglicht eine ökonomisch sinnvolle Verarbeitung der erfindungsgemäßen Kautschukmischung bei gleichzeitiger Prozesssicherheit, da die Kautschukmischung keine Scorch-Anfälligkeit zeigt.

Die erfindungsgemäße Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten.

Einsetzbare Dienkautschuke sind beispielsweise natürliches Polyisopren (NR), synthetisches Polyisopren (IR), Polybutadien (BR), Styrol-Butadien-Kautschuk (SBR), Styrol-Isopren-Butadien-Terpolymer, Butylkautschuk, Halobutylkautschuk, Ethylen-Propylen-Dien-Kautschuk (EPDM) oder modifizierte Dienkautschuke. Bei der Modifizierung kann es sich um solche mit Hydroxyl-Gruppen und/oder Ethoxy-Gruppen und/oder Epoxy-Gruppen und/oder Siloxan-Gruppen und/oder Amino-Gruppen und/oder Aminosiloxan und/oder Carboxyl-Gruppen und/oder Phthalocyanin-Gruppen handeln. Es kommen aber auch weitere, der fachkundigen Person bekannte, Modifizierungen, auch als Funktionalisierungen bezeichnet, in Frage. Bestandteil solcher Funktionalisierungen können auch Metallatome sein.

Bevorzugt ist der Dienkautschuk ausgewählt aus der Gruppe bestehend aus natürlichem und/oder synthetischem Polyisopren und/oder Polybutadien und/oder Styrol-ButadienKautschuk.

Die Mengen an natürlichem und/oder synthetischem Polyisopren betragen 0 bis 100 phr, bevorzugt 30 bis 100 phr, besonders bevorzugt 50 bis 100 phr.

Bei dem Styrol-Butadien-Copolymer (Styrol-Butadien-Kautschuk) kann es sich um lösungspolymerisiertes Styrol-Butadien-Copolymer (S-SBR) mit einem Styrolgehalt, bezogen auf das Polymer, von ca. 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert und/oder entlang der Kohlenstoffkette modifiziert (engl. backbone modified) sein. Bei der Modifizierung kann es sich um die oben beschriebenen Gruppen und Funktionalisierungen handeln.

Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die Mengen an Styrol-Butadien-Kautschuk betragen 0 bis 100, bevorzugt 0 bis 70, besonders bevorzugt 0 bis 50 phr.

Bei dem Polybutadien (=Butadienkautschuk, BR) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadienkautschuk) mit einem cis-Anteil von 20 bis 50 Gew.-%. Ein high-cis-Polybutadien ist z.B. Nd-BR (Neodym-katalysierter Butadienkautschuk). Mit Nd-BR werden besonders gute Vulkanisateigenschaften der Kautschukmischung erzielt.

Das eingesetzte Polybutadien kann endgruppenmodifiziert sein. Bei der Modifizierung kann es sich um die oben beschriebenen Gruppen und Funktionalisierungen handeln.

Die Mengen an Butadienkautschuk betragen 0 bis 100, bevorzugt 0 bis 70, besonders bevorzugt 0 bis 50 phr, ganz besonders bevorzugt 5 bis 30 phr.

Bevorzugt enthält die Kautschukmischung 50 bis 100 phr eines natürlichen und/oder synthetischen Polyisoprens, 0 bis 50 phr eines Polybutadien-Kautschuks sowie 0 bis 50 phr eines Styrol-Butadien-Kautschuks. Eine solche Kautschukmischung zeigt besonders vorteilhafte Eigenschaften hinsichtlich der Prozessierbarkeit und der genannten Zielkonflikte in LKW-Laufstreifen.

In einer besonders bevorzugten Ausführungsform der Erfindung enthält die Kautschukmischung 80 bis 100 phr eines natürlichen und/oder synthetischen Polyisoprens, 5 bis 30 phr eines Polybutadien-Kautschuks und 0 bis 20 phr eines Styrol-Butadien-Kautschuks.

Eine solche Kautschukmischung zeigt neben den genannten Vorteilen hinsichtlich der Zielkonflikte besonders vorteilhafte Weiterreißeigenschaften in LKW-Laufstreifen, was die dem Fachmann bekannte "Chip&Chunk-Performance" des Reifens verbessert.

Die erfindungsgemäße Kautschukmischung enthält wenigstens ein Cumaron-Inden-Harz. Dabei kommen alle dem Fachmann bekannten Cumaron-Inden-Harze in Frage. Bevorzugt hat das eingesetzte Cumaron-Inden-Harz einen Erweichungspunkt gemäß ASTM D 3461 von 0 °C bis 170 °C, besonders bevorzugt von 0 °C bis 50 °C und besonders bevorzugt von 5 °C bis 15 °C. In einer besonders bevorzugten Ausführungsform wird ein Cumaron-Inden-Harz verwendet, welches einen Erweichungspunkt von 8 bis 12 °C hat. Ein solches bei Raumtemperatur flüssiges Cumaron-Inden-Harz ist z.B. unter dem Handelsnamen Novares® C 10 der Firma Rütgers Chemicals AG, Deutschland erhältlich.

Ein derartiges Harz zeigt in einer Kautschukmischung gute Eigenschaften hinsichtlich der Heizkinetik und der physikalischen Eigenschaften, insbesondere der Rückprallelastizitäten.

Die Menge an eingesetztem Cumaron-Inden-Harz beträgt 0,1 bis 20 phr, bevorzugt 2 bis 10 phr.

Die erfindungsgemäße Kautschukmischung enthält weiterhin ein Vulkanisationssystem, das wenigstens einen Beschleuniger und elementaren Schwefel und/oder wenigstens eine schwefelspendende Substanz enthält, wobei das Molverhältnis von Beschleuniger zu Schwefel (Beschleuniger/Schwefel-Verhältnis) 0,9 bis 5, bevorzugt 1,0 bis 2, beträgt.

Ein derartiges Vulkanisationssystem wird auch als effizientes Vulkanisationssystem bezeichnet. Hierbei ist die molare Menge an Beschleuniger gegenüber der Menge an Schwefel vergleichsweise hoch und es bilden sich bei der Vernetzung überwiegend monosulfidische Schwefelbrücken zwischen den Polymerketten aus.

Der Beschleuniger ist ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS). Besonders bevorzugt ist die Verwendung von TBBS.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.

Erfindungswesentlich ist es, dass bei der Berechnung des Molverhältnisses von Beschleuniger zu Schwefel in die Gesamtmolmenge Schwefel sowohl der als elementarer Schwefel zugegebene Schwefel als auch der Schwefel aus schwefelspendenden Substanzen eingeht. Der elementare Schwefel, auch als freier Schwefel bezeichnet, wird der Kautschukmischung üblicherweise als Pulver oder Granulat zugegeben.

Schwefelspendende Substanzen, enthaltend Vernetzungsmittel, die Schwefel an das Netzwerk abgeben, sind der fachkundigen Person bekannt oder z. B. in Hofmann & Gupta: Handbuch der Kautschuktechnologie, Gupta-Verlag (2001), Kapitel 7, beschrieben. Schwefelspendende Substanzen werden auch als Schwefeldonoren oder Schwefelspender bezeichnet.

Die schwefelspendende Substanz ist dabei bevorzugt ausgewählt aus der Gruppe enthaltend z.B. Thiuramdisulfide , wie z.B. Tetrabenzylthiuramdisulfid (TBzTD) und/oder Tetramethylthiuramdisulfid (TMTD) und/oder Tetramethylthiurammonosulfid (TMTM) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide und/oder 3,3'-Bis(triethoxysilylpropyl)tetrasulfid (TESPT).

Die schwefelspendende Substanz kann demnach auch ein schwefelspendender Beschleuniger sein. In diesem Fall zählen 1 mol des zugegebenen Beschleunigers in dem Molverhältnis von Beschleuniger zu Schwefel als 1 mol Beschleuniger und x mol Schwefel, wobei x die Molmenge an Schwefelatomen darstellt, die 1 mol des schwefelspendenden Beschleunigers während der Vulkanisation abgeben.

Es ist dem Fachmann bekannt, dass z.B. TBzTD zwei Schwefelatome abgibt, die an der Vulkanisation teilnehmen. Mit TBzTD als schwefelspendendem Beschleuniger ist es in einer schwefelarmen Kautschukmischung (sehr geringe Mengen, < 0,3 phr, an elementarem/freiem Schwefel vorhanden) oder in einer Kautschukmischung ohne zugesetzten freien Schwefel möglich ein überwiegend monosulfidisches Netzwerk, also ein effizientes Netzwerk bei der Vulkanisation einzustellen.

Wenn die Kautschukmischung ein oder mehrere sulfidische Silane enthält, so gehen nur diese bei der Berechnung des Molverhältnisses von Beschleuniger zu Schwefel in die Gesamtmolmenge Schwefel ein, die Schwefelatome abgeben können. So zählt das disulfidische Silane TESPD (3,3'-Bis(triethoxysilylpropyl)disulfid) im Rahmen der Erfindung nicht als schwefelspendende Substanz, die in die Berechnung des Molverhältnisses von Beschleuniger zu Schwefel eingeht. Das tetrasulfidische Silan TESPT (3,3'-Bis(triethoxysilylpropyl)tetrasulfid) gibt, wie dem Fachmann bekannt, zwei Schwefelatome ab und geht daher in die Berechnung des Molverhältnisses ein.

Um das angestrebte Molverhältnis von Beschleuniger zu Schwefel des effizienten Vulkanisationssystems von 0,9 bis 5 in der erfindungsgemäßen Kautschukmischung zu erhalten, liegt die zugegebene Menge an Beschleuniger zwischen 2 und 10 phr, bevorzugt zwischen 2 und 8 phr, besonders bevorzugt zwischen 2 und 6 phr und die Menge an elementarem Schwefel bevorzugt zwischen 0,2 und 1 phr, bevorzugt 0,2 bis 0,8 phr, besonders bevorzugt 0,2 bis 0,6 phr.

Es ist im Rahmen der Erfindung auch denkbar, dass mehr als ein Beschleuniger aus den oben genannten Gruppen in der Kautschukmischung enthalten ist.

Wenn mehr als ein Beschleuniger in der Kautschukmischung enthalten ist, gehen alle zugegebenen Beschleuniger in das Molverhältnis von Beschleuniger zu elementarem Schwefel ein, und die Summe aller Mengen der zugegebenen Beschleuniger liegt zwischen 2 und 10 phr.

Die Kautschukmischung kann als Füllstoffe Ruß und/oder Kieselsäure in üblichen Mengen enthalten. Sie kann außerdem noch andere Füllstoffe, wie beispielsweise Alumosilicate, Kreide, Stärke, Magnesiumoxid, Titandioxid oder Kautschukgele enthalten.

Die verwendbaren Ruße weisen bevorzugt folgende Charakteristika auf: DBP-Zahl (gemäß ASTM D 2414) 90 bis 200 mL/100 g und/oder CTAB-Zahl (gemäß ASTM D 3765) 80 bis 170 m²/g und/oder Jodadsorptionszahl (gemäß ASTM D 1510) 10 bis 250 g/kg. Als Ruß kann z.B. N220 (DBP = 114 ml/100 g; Jodzahl = 121 g/kg; CTAB = 102 m²/g) eingesetzt werden. Mit einem solchen Ruß wird eine besonders gute Haltbarkeit der Kautschukmischung erzielt.

Die Menge an Ruß beträgt 0,1 bis 100 phr, bevorzugt 10 bis 80 phr, besonders bevorzugt 20 bis 60 phr.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt 100 bis 260 m²/g und eine CTAB-Oberfläche (gemäß ASTM D 3765) von 30 bis 350 m²/g, bevorzugt von 30 bis 250 m²/g, besonders bevorzugt von 100 bis 250 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Vorteilhafte Eigenschaften ergeben sich, wenn die Kautschukmischung 0,1 bis 15 phr, bevorzugt 2 bis 10 phr, besonders bevorzugt 3 bis 9 phr Kieselsäure enthält.

Zur Verbesserung der Verarbeitbarkeit und zur Anbindung der Kieselsäure und anderer ggf. vorhandener polarer Füllstoffe an den Dienkautschuk können Silan-Kupplungsagenzien in üblichen Mengen in Kautschukmischungen eingesetzt werden. Als Silan-Kupplungsagenzien können dabei alle dem Fachmann für die Verwendung in Kautschukmischungen bekannten Silan-Kupplungsagenzien verwendet werden. Dies können z.B. 3,3'-Bis(tiiethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, sein. TESPT kann dabei beispielsweise auch als Gemisch mit Industrieruß (Handelsname X50S® der Firma Evonik) zugesetzt werden. Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Da dieses Gemisch überwiegend disulfidische Silane (S2-Silane) enthält, geht nur der Anteil der darin enthaltenen schwefelspendenden Silane (S3- und S4-Silane) in die oben beschriebene Berechnung des Molverhältnisses von Beschleuniger zu Schwefel ein. Ausgehend davon, dass ein S3-Silan ein Schwefelatom abgibt und ein S4-Silan 2 Schwefelatome abgibt, gehen diese Schwefelatome in die Berechnung des Molverhältnisses von Beschleuniger zu Schwefel ein.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Die Silan-Kupplungsagenzien werden in Mengen von 0,2 bis 30 phf, bevorzugt 1 bis 15 phf, besonders bevorzugt 1 bis 10 phf eingesetzt, da dann eine optimale Anbindung des Füllstoffes an den oder die Kautschuke erfolgen kann. Die Angabe phf bezieht sich auf 100 Gewichtsteile Füllstoff (parts per hundred parts of filler by weight).

Die Kautschukmischung kann außerdem Weichmacher enthalten. Hierzu gehören alle dem Fachmann bekannten wie z.B. aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Weichmacherharze oder Flüssig-Polymere (wie Flüssig-BR), deren mittleres Molekulargewicht (Bestimmung per GPC = gel permeation chromatography in Anlehnung an BS ISO 11344:2004) zwischen 500 und 25000 g/mol liegt.

Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Es ist im Rahmen dieser Erfindung auch denkbar, dass ein Gemisch der genannten Weichmacher eingesetzt wird.

Die Menge an Weichmachern beträgt 0 bis 10 phr, bevorzugt 0 bis 5 phr, wenigstens aber 0,1 phr.

Sehr gute Ergebnisse hinsichtlich der Prozessierbarkeit zeigen sich auch, wenn die Kautschukmischung frei von Weichmachern ist, also 0 phr Weichmacher enthält.

Des Weiteren kann die erfindungsgemäße Kautschukmischung übliche Zusatzstoffe in üblichen Gewichtsteilen enthalten. Zu diesen Zusatzstoffen zählen a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), b) Aktivatoren, wie z. B. Zinkoxid und Fettsäuren (z. B. Stearinsäure), c) Wachse, d) weitere Harze zusätzlich zu den erfindungsgemäß notwendigen Cumaron-Inden-Harzen und e) Mastikationshilfsmittel, wie z. B. 2,2'-Dibenzamidodiphenyldisulfid (DBD).

Die Vulkanisation wird wie oben erwähnt in Anwesenheit von elementarem Schwefel mit Hilfe wenigstens eines Vulkanisationsbeschleunigers und/oder wenigstens einer schwefelspendenden Substanz durchgeführt. Elementarer Schwefel und Beschleuniger und/oder schwefelspende Substanzen werden im letzten Mischungsschritt in den genannten Mengen der Kautschukmischung zugesetzt.

Außerdem können in der Kautschukmischung Vulkanisationsverzögerer sowie weitere die Vulkanisation beeinflussende Substanzen vorhanden sein.

Der Erfindung liegt weiterhin die Aufgabe zugrunde einen Fahrzeugluftreifen bereitzustellen, der in wenigstens einem Bauteil die erfindungsgemäße Kautschukmischung enthält. Bevorzugt handelt es sich bei dem Bauteil um einen Laufstreifen, vorzugsweise eines LKW. Die Kautschukmischung kann aber auch in der Seitenwand und/oder in den inneren Bauteilen eines Fahrzeugluftreifens, den sogenannten Body-Bauteilen, zum Einsatz kommen.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (elementarer Schwefel, Beschleuniger, ggf. schwefelspendende Substanzen sowie ggf. Vulkanisationsverzögerer) enthält, in ein oder mehreren Mischstufen hergestellt wird und im Anschluss durch Zugabe des Vulkanisationssystems die Fertigmischung erzeugt wird.

Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen geeignet.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Umsatzzeiten von 10% Umsatz (t₁₀ Anvulkanisationszeit) und 90% Umsatz (t₉₀, Ausvulkanisationszeit) mittels rotorlosem Vulkameter (MDR = Moving Disc Rheometer) gemäß DIN 53 529
- Mooney-Viskosität gemäß ASTM D1646
- Shore-A-Härte bei Raumtemperatur RT und 70 °C gemäß DIN ISO 7619-1 1
- Rückprallelastizitäten bei 70 °C gemäß DIN 53 512
- Zugfestigkeit, Reißdehnung und Spannungswert bei 300 % statischer Dehnung (Modul 300 %) bei Raumtemperatur gemäß DIN 53 504

**Tabelle 1**

| **Bestandteile** | **Einheit** | **V1** | **V2** | **V3** | **E1** |
|---|---|---|---|---|---|
| NR TSR | phr | 85 | 85 | 85 | 85 |
| Nd-BR ^{a)} | phr | 15 | 15 | 15 | 15 |
| Ruß N220 | phr | 47 | 47 | 47 | 47 |
| Kieselsäure ^{b)} | phr | 6 | 6 | 6 | 6 |
| Harz ^{c)} | phr | 0 | 5 | 0 | 5 |
| Alterungsschutzmittel | phr | 5 | 5 | 5 | 5 |
| Stearinsäure | phr | 2 | 2 | 2 | 2 |
| Zinkoxid | phr | 3 | 3 | 3 | 3 |
| Beschleuniger TBBS | phr | 1,1 | 1,35 | 3,5 | 4,1 |
| Elementarer Schwefel | phr | 1,1 | 1,35 | 0,35 | 0,41 |
| Molverhältnis Beschl./S | | 0,13 | 0,13 | 1,34 | 1,34 |

| **Eigenschaften** | | | | | |
|---|---|---|---|---|---|
| t₁₀ | min | 2,32 | 2,06 | 2,61 | 2,38 |
| t₉₀ | min | 5,48 | 3,97 | 9,55 | 7,48 |
| Mooney-Viskosität ML (1+4) b. 100 °C | Mooney-Einh. | 79,7 | 69,1 | 74,7 | 69,3 |
| Shore-A-Härte bei RT | Shore A | 61,3 | 59,7 | 59,6 | 61,0 |
| Rückprallelast. bei 70 °C | % | 56,4 | 56,6 | 54,6 | 57,2 |
| Zugfestigkeit bei RT | MPa | 23,3 | 23,0 | 22,1 | 22,7 |
| Reißdehnung bei RT | % | 550 | 613 | 527 | 544 |
| Modul 300 % | MPa | 11,4 | 9,1 | 11,0 | 10,8 |

| | | | | | |
|---|---|---|---|---|---|
| ^{a)} Nd-BR: Europrene® NEOCIS BR 40, Fa. Polimeri ^{b)} Kieselsäure: Ultrasil® VN3 GR, Fa. Evonik ^{c)} Harz: Novares® C10, Fa. Rütgers Chemicals | | | | | |

Anhand der Tabelle 1 ist ersichtlich, dass die erfindungsgemäße Kautschukmischung E1 eine überraschend höhere und damit bessere Rückprallelastizität bei 70 °C aufweist, als die Vergleichsmischungen mit Harz (V2) und effizientem Netzwerk (V3). Damit zeigen z.B. Fahrzeugluftreifen, die die erfindungsgemäße Kautschukmischung enthalten, Fahrzeugluftreifen, die die erfindungsgemäße Kautschukmischung enthalten, erwartungsgemäß ein verbessertes Rollwiderstandsverhalten. Gleichzeitig zeigt die Kautschukmischung E1 eine verbesserte Prozesssicherheit durch die erhöhte t₁₀-Zeit bei einer moderaten Ausvulkanisationszeit t₉₀, die eine ökonomisch sinnvolle Verarbeitung der Kautschukmischung und daraus gefertigten vulkanisierten Erzeugnissen ermöglicht.

## Patentansprüche

1. Kautschukmischung enthaltend
- wenigstens einen Dienkautschuk und
- 0,1 bis 20 phr wenigstens eines Cumaron-Inden-Harzes und
- ein Vulkanisationssystem, das wenigstens einen Beschleuniger und elementaren Schwefel und/oder wenigstens eine schwefelspendende Substanz enthält, wobei das Molverhältnis von Beschleuniger zu Schwefel 0,9 bis 5 beträgt, wobei die Gesamtmolmenge Schwefel aus elementarem Schwefel und dem von der schwefelspendenden Substanzen abgegebenem Schwefel besteht.

2. Kautschukmischung nach Anspruch 1, **dadurch gekennzeichnet, dass** der Dienkautschuk ausgewählt ist aus der Gruppe bestehend aus natürlichem und/oder synthetischem Polyisopren und/oder Polybutadien und/oder Styrol-Butadien-Kautschuk.

3. Kautschukmischung nach einem der Ansprüche 1 oder 2, **dadurch gekennzeichnet, dass** die Kautschukmischung 50 bis 100 phr eines natürlichen und/oder synthetischen Polyisoprens, 0 bis 50 phr eines Polybutadien-Kautschuks und 0 bis 50 phr eines Styrol-Butadien-Kautschuk enthält.

4. Kautschukmischung nach einem der Ansprüche 1 bis 3, **dadurch gekennzeichnet, dass** das Cumaron-Inden-Harz einen Erweichungspunkt gemäß ASTM D 3461 zwischen 0 °C und 170 °C hat.

5. Kautschukmischung nach einem der Ansprüche 1 bis 4, **dadurch gekennzeichnet, dass** die Menge an Cumaron-Inden-Harz 2 bis 10 phr beträgt.

6. Kautschukmischung nach einem der Ansprüche 1 bis 5**, dadurch gekennzeichnet, dass** der Beschleuniger ausgewählt ist aus der Gruppe bestehend aus Thiazolbeschleunigern und/oder Mercaptobeschleunigern und /oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern.

7. Kautschukmischung nach Anspruch 6, **dadurch gekennzeichnet, dass** der Sulfenamidbeschleuniger ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

8. Kautschukmischung nach einem der Ansprüche 1 bis 7, **dadurch gekennzeichnet, dass** sie zusätzlich 0,1 bis 15 phr wenigstens einer Kieselsäure enthält.

9. Fahrzeugluftreifen, **dadurch gekennzeichnet, dass** er in wenigstens einem Bauteil wenigstens eine Kautschukmischung nach einem der Ansprüche 1 bis 8 enthält.

10. Fahrzeugluftreifen nach Anspruch 9, **dadurch gekennzeichnet, dass** das Bauteil ein Laufstreifen ist.

## Claims

1. Rubber mixture comprising
- at least one diene rubber and
- from 0.1 to 20 phr of at least one coumarone-indene resin and
- a vulcanization system which comprises at least one accelerator and elemental sulphur and/or at least one sulphur-donor substance, where the molar ratio of accelerator to sulphur is from 0.9 to 5, where the total molar quantity of sulphur is composed of elemental sulphur and of the sulphur released by the sulphur-donor substances.

2. Rubber mixture according to Claim 1, **characterized in that** the diene rubber is selected from the group consisting of natural and/or synthetic polyisoprene and/or polybutadiene and/or styrene-butadiene rubber.

3. Rubber mixture according to Claim 1 or 2, **characterized in that** the rubber mixture comprises from 50 to 100 phr of a natural and/or synthetic polyisoprene, from 0 to 50 phr of a polybutadiene rubber and from 0 to 50 phr of a styrene-butadiene rubber.

4. Rubber mixture according to any of Claims 1 to 3, **characterized in that** the softening point of the coumarone-indene resin is from 0°C to 170°C in accordance with ASTM D3461.

5. Rubber mixture according to any of Claims 1 to 4, **characterized in that** the quantity of coumarone-indene resin is from 2 to 10 phr.

6. Rubber mixture according to any of Claims 1 to 5, **characterized in that** the accelerator is selected from the group consisting of thiazole accelerators and/or mercapto accelerators and/or sulphenamide accelerators and/or thiocarbamate accelerators and/or thiuram accelerators and/or thiophosphate accelerators and/or thiourea accelerators and/or guanidine accelerators and/or xanthogenate accelerators.

7. Rubber mixture according to Claim 6, **characterized in that** the sulphenamide accelerator is selected from the group consisting of N-cyclohexyl-2-benzothiazolesulphenamide (CBS) and/or N,N-dicylohexylbenzothiazole-2-sulphenamide (DCBS) and/or benzothiazyl-2-sulphene morpholide (MBS) and/or N-tert-butyl-2-benzothiazylsulphenamide (TBBS).

8. Rubber mixture according to any of Claims 1 to 7, **characterized in that** it also comprises from 0.1 to 15 phr of at least one silica.

9. Pneumatic tyre, **characterized in that** it comprises, in at least one component, at least one rubber mixture according to any of Claims 1 to 8.

10. Pneumatic tyre according to Claim 9, **characterized in that** the component is a tread.

## Revendications

1. Mélange de caoutchouc contenant
- au moins un caoutchouc diénique et
- 0,1 à 20 pce d'au moins une résine coumarone-indène et
- un système de vulcanisation, qui contient au moins un accélérateur et du soufre élémentaire et/ou au moins une substance distribuant du soufre, le rapport molaire entre l'accélérateur et le soufre étant de 0,9 à 5, la quantité molaire totale de soufre étant constituée par le soufre élémentaire et le soufre libéré par les substances distribuant du soufre.

2. Mélange de caoutchouc selon la revendication 1, **caractérisé en ce que** le caoutchouc diénique est choisi dans le groupe constitué par le polyisoprène naturel et/ou synthétique et/ou le polybutadiène et/ou le caoutchouc de styrène-butadiène.

3. Mélange de caoutchouc selon l'une quelconque des revendications 1 ou 2, **caractérisé en ce que** le mélange de caoutchouc contient 50 à 100 pce d'un polyisoprène naturel et/ou synthétique, 0 à 50 pce d'un caoutchouc de polybutadiène et 0 à 50 pce d'un caoutchouc de styrène-butadiène.

4. Mélange de caoutchouc selon l'une quelconque des revendications 1 à 3, **caractérisé en ce que** la résine coumarone-indène a un point de ramollissement selon ASTM D 3461 compris entre 0 °C et 170 °C.

5. Mélange de caoutchouc selon l'une quelconque des revendications 1 à 4, **caractérisé en ce que** la quantité de résine coumarone-indène est de 2 à 10 pce.

6. Mélange de caoutchouc selon l'une quelconque des revendications 1 à 5, **caractérisé en ce que** l'accélérateur est choisi dans le groupe constitué par les accélérateurs thiazole et/ou les accélérateurs mercapto et/ou les accélérateurs sulfénamide et/ou les accélérateurs thiocarbamate et/ou les accélérateurs thiuram et/ou les accélérateurs thiophosphate et/ou les accélérateurs thiourée et/ou les accélérateurs guanidine et/ou les accélérateurs xanthogénate.

7. Mélange de caoutchouc selon la revendication 6, **caractérisé en ce que** l'accélérateur sulfénamide est choisi dans le groupe constitué par le N-cyclohexyl-2-benzothiazole-sulfénamide (CBS) et/ou le N,N-dicyclohexylbenzothiazole-2-sulfénamide (DCBS) et/ou le morpholide de benzothiazyl-2-sulfène (MBS) et/ou le N-tert.-butyl-2-benzothiazylsulfénamide (TBBS).

8. Mélange de caoutchouc selon l'une quelconque des revendications 1 à 7, **caractérisé en ce qu'**il contient en outre 0,1 à 15 pce d'au moins une silice.

9. Pneu automobile, **caractérisé en ce qu'**il contient dans au moins un composant au moins un mélange de caoutchouc selon l'une quelconque des revendications 1 à 8.

10. Pneu automobile selon la revendication 9, **caractérisé en ce que** le composant est une bande de roulement.
